(19) Europäisches Patentamt
European Patent Office
Office européen des brevets

(11) EP 1 900 762 A1

(12) EUROPÄISCHE PATENTANMELDUNG

(43) Veröffentlichungstag:
**19.03.2008 Patentblatt 2008/12**

(51) Int Cl.:
***C08F 236/04*** *(2006.01)* ***C08F 10/00*** *(2006.01)*
***C08F 4/06*** *(2006.01)* ***C08F 4/12*** *(2006.01)*

(21) Anmeldenummer: **06019318.2**

(22) Anmeldetag: **15.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Rütgers Chemicals GmbH**
**47138 Duisburg (DE)**

(72) Erfinder:
- **Hillner, Knut**
  **59379 Selm (DE)**
- **Müller, Peter**
  **49808 Lingen (DE)**
- **Schäferling, Heinz**
  **46149 Oberhausen (DE)**
- **Thomsen, Sven-Arne**
  **45276 Essen (DE)**
- **Szarvas, Laszio**
  **67971 Ludwigshafen (DE)**
- **Uerdingen, Eric**
  **67346 Speyer (DE)**
- **Vagt, Uwe**
  **68165 Mannheim (DE)**
- **Wissel, Kathrin**
  **59056 Ludwigshafen (DE)**

(74) Vertreter: **Schaad, Balass, Menzl & Partner AG**
**Dufourstrasse 101**
**Postfach**
**8034 Zürich (CH)**

# (54) Verfahren zur Herstellung eines Kohlenwasserstoffharzes

(57) Die Erfindung betrifft ein Verfahren zur Herstellung eines Kohlenwasserstoffharzes durch Polymerisation einer Monomerzusammensetzung enthaltend mindestens ein Monomer ausgewählt aus der Gruppe bestehend aus cis-Piperylen, trans-Piperylen, Cyclopenten und 2-Alkenen mit fünf Kohlenstoffatomen. Dabei wird ein die Monomerzusammensetzung enthaltendes Kohlenwasserstoffgemisch mit einem Anteil an Isopren von weniger als 5 Gew.% bezogen auf das Gesamtgewicht des Kohlenwasserstoffgemischs in einem organischen Lösungsmittel zur Herstellung einer Reaktionslösung gelöst, sodass der Anteil des organischen Lösungsmittels mindestens 35 Gew.% bezogen auf das Gesamtgewicht der erhaltenen Reaktionslösung beträgt, und die Reaktionslösung mit einer sauren ionischen Flüssigkeit in Kontakt gebracht, wodurch das Kohlenwasserstoffharz erhalten wird.

EP 1 900 762 A1

## Beschreibung

Die vorliegende Erfindung betrifft ein Verfahren zur Herstellung eines Kohlenwasserstoffharzes durch Polymerisation einer definierten Monomerzusammensetzung gemäss Anspruch 1, ein Kohlenwasserstoffharz erhältlich nach einem solchen Verfahren gemäss Anspruch 19 und die Verwendung einer sauren ionischen Flüssigkeit als Katalysator für die Polymerisation einer solchen Monomerzusammensetzung gemäss Anspruch 20.

Kohlenwasserstoffharze sind thermoplastische Polymere mit geringen bis moderat hohen Molekularmassen. Sie werden mittels kationischer Polymerisation ungesättigter Kohlenwasserstoffverbindungen hergestellt. Eine solche Polymerisation wird auch als Verharzung bezeichnet. Die derart hergestellten Kohlenwasserstoffharze umspannen den Bereich von viskosen Flüssigkeiten bis zu hart-spröden Feststoffen.

Kohlenwasserstoffharze werden üblicherweise zur Modifizierung anderer Materialien (Matrixmaterialien) und nicht als solche verwendet. Bei den zu modifizierenden Matrixmaterialien handelt es sich in der Regel um Polymere. Unter den Kohlenwasserstoffharzen sind insbesondere solche, die durch Polymerisation von Alkenen und/oder Alkadienen mit fünf Kohlenstoffatomen erhalten werden (C5-Kohlenwasserstoffharze), als Modifikatoren in Klebstoffen, Gummi, Schmelzklebstoffen, Schmelzbeschichtungen, Druckfarben, Bodenbelägen, Farben, insbesondere Strassenmarkierungsfarben, und weiteren Anwendungen geeignet.

Als Ausgangsmaterial zur Herstellung von C5-Kohlenwasserstoffharzen werden üblicherweise C5-Fraktionen verwendet, wie sie beim Cracken von langkettigen Kohlenwasserstoffen gewonnen werden. Die polymerisierbaren Monomere der C5-Fraktion werden von nicht polymerisierbaren Komponenten begleitet, welche bei der Polymerisation der Monomere als Lösungsmittel fungieren. Bei den in der C5-Fraktion enthaltenen, nicht polymerisierbaren Komponenten handelt es sich im Wesentlichen um Cyclopentan und die isomeren Pentane.

Die Polymerisation zur Herstellung eines Kohlenwasserstoffharzes wird konventionell mit Hilfe von Friedel-Crafts-Katalysatoren wie zum Beispiel $AlCl_3$ durchgeführt. Die dabei verwendeten Friedel-Crafts-Katalysatoren sind homogene Katalysatoren, d.h. sie befinden sich in der gleichen Phase wie die Reaktanden.

Die Herstellung von Kohlenwasserstoffharzen durch Polymerisation von Alkenen und/oder Alkadienen mit fünf Kohlenstoffatomen in Anwesenheit einer Lewissäure als homogenem Friedel-Crafts-Katalysator ist ein seit vielen Jahren gängiges Verfahren, wie beispielsweise in R. Mildenberg et al, Hydrocarbon Resins, International Resins Club, Frankfurt am Main, 2002, ausgeführt wird.

Homogen katalysierte Polymerisationen sind bezüglich katalytischer Wirkung zwar sehr effektiv, weisen aber auch schwerwiegende Nachteile auf.

Einer der Hauptnachteile der homogenen Katalyse liegt darin, dass der verwendete Friedel-Crafts-Katalysator nach erfolgter Verharzung in der Regel durch Basenbehandlung irreversibel inaktiviert werden muss. So wird etwa $AlCl_3$ in den gängigen Verfahren unter Bildung von nicht-löslichem Aluminiumoxidhydroxid zerstört und daraufhin in einem aufwändigen Filtrationsverfahren vom Produkt-Lösungsmittelgemisch abgetrennt.

Um den Restgehalt von Aluminium- und Chloridionen im Produkt-Lösungsmittelgemisch auf einen möglichst geringen Wert zu bringen, wird dieses mehrfach gewaschen. Dies ist notwendig, da verbleibende Ionen die weitere Verarbeitung des Kohlenwasserstoffharzes stören würden. Allerdings entstehen beim Waschen regelmässig schlecht trennbare Flüssig-Flüssig-Mischungen (sogenannte "Mulmbildung"), die nur unter grossem Aufwand verarbeitet werden können.

Somit ergibt sich mit den konventionellen Verfahren eine Kombination an unerwünschten Prozessen, nämlich die irreversible Inaktivierung und somit die Vernichtung des Katalysators sowie die aufwändige Abtrennung und Entsorgung des inaktivierten Katalysators.

Um die Probleme, die sich mit einem homogenen Katalysator ergeben, zu umgehen, wurde daher vorgeschlagen, statt des homogenen Katalysators ein an einen festen Träger gebundenen sauren Katalysator zu verwenden, der nach erfolgter Polymerisation von der Reaktionsmischung entfernt werden kann. Entsprechende Verfahren sind zum Beispiel in WO 98/30519, US-B-6,444,866 und US-B-6,608,155 beschrieben. Allerdings führen die darin beschriebenen heterogenen Katalysatorsysteme zu relativ schlechten Raum-Zeit-Ausbeuten. Aufgrund der raschen Verharzung und der damit einhergehenden raschen Deaktivierung der reaktiven Zentren des heterogenen Katalysators sind diese zudem für kontinuierliche Verfahren schlecht geeignet. In der Praxis haben sich solche Systeme folglich auch nicht durchgesetzt.

Alternativ zu den an Träger gebundenen sauren Katalysatoren wurde für die Polymerisation von 1-Alkenen, d.h. Monoenen mit der Doppelbindung in Position 1, und Monamermischungen enthaltend 1-Alkene die Verwendung ionischer Flüssigkeiten, d.h. Salzgemische mit einem relativ tiefen Schmelzpunkt, vorgeschlagen:

So beschreibt FR-A-2611700 ein Verfahren zur Dimerisierung von Buten mit Hilfe von auf Nickel basierenden organometallischen Katalysatoren, die in ionischen Flüssigkeiten gelöst sind.

US-B-5,304,615 beschreibt ein Verfahren zur Oligomerisierung von Buten mit Hilfe einer ionischen Flüssigkeit in Abwesenheit eines Ni-Katalysators. US-B-5,304,615 stellt zudem fest, dass nicht alle ionischen Flüssigkeiten für

die spezifischen Reaktionen, in denen sie angewendet werden können, wünschenswerte Eigenschaften besitzen und dass die Wahl spezieller ionischer Flüssigkeiten für eine vorgegebene Reaktion kaum vorhersagbar ist.

WO 95/21871 beschreibt eine ionische Flüssigkeit enthaltend ein dialkylsubstituiertes Imidazolhalogenid und deren Verwendung für die Polymerisierung von Olefinen mit zwei bis vier Kohlenstoffatomen.

WO 00/32658 bezieht sich auf eine ionische Flüssigkeiten und deren Funktion als Initiator oder Cosolvens bei der Herstellung von Polyisobutylenen mit hohem Molekulargewicht.

US-B-6,395,948 und die zur selben Patentfamilie gehörende WO 03/070670 offenbaren ein Verfahren zur Herstellung eines hochviskosen Polyalphaolefins unter Verwendung einer ionischen Flüssigkeit als Katalysator. Gemäss dieser Druckschrift ist es wesentlich, dass die Reaktionsmischung kein Lösungsmittel enthält.

Die Polymerisation von Olefinen mit fünf Kohlenwasserstoffatomen unter Verwendung von ionischen Flüssigkeiten wird in keiner der oben genannten Druckschriften beschrieben.

Ferner wird auf die Polymerisation von 1-Alkenen (auch "1-Olefine" oder "Alphaolefine" genannt) in folgenden Druckschriften eingegangen:

WO 03/089390 und die entsprechende US-A-2004/0030075 beschreiben ein Verfahren zur kontinuierlichen Herstellung eines hochviskosen Polyalphaolefinprodukts durch Einleitung eines Monomers und einer ionische Flüssigkeit in eine Reaktionszone und gleichzeitiger Entnahme eines Ausflusses enthaltend das hochviskose Polyalphaolefin. Die eingesetzten Olefine können 4 bis 20 Kohlenstoffatome aufweisen.

US-A-2005/0113621, die auf der US-A-2004/0030075 basiert, offenbart ein Verfahren zur Herstellung sehr hochviskoser Polyalphaolefine mittels einer sauren ionischen Flüssigkeit als Oligomerisierungskatalysator in Abwesenheit eines organischen Verdünnungsmittel.

EP-A-0791643 bezieht sich auf ein Verfahren zur Herstellung von Schmierölen durch Oligomerisierung eines Ausgangsmaterial enthaltend ein oder mehrere C5 - C18 1-Olefine in der Anwesenheit eines Oligomerisierungskatalysators enthaltend eine ionische Flüssigkeit.

Die beschriebenen Verfahren gehen alle von 1-Alkenen aus, also Monoenen mit der Doppelbindung in Position 1.

Allerdings ist es bisher noch nicht gelungen, ein Verfahren zur Herstellung von Kohlenwasserstoffharzen zu entwickeln, das von technisch relevanten Monomerzusammensetzungen enthaltend Alkadiene, Cycloalkene oder 2-Alkene mit fünf Kohlenstoffatomen ausgeht und die sich mit der oben beschriebenen homogenen Katalyse ergebenden Nachteile umgeht.

Ein solches Verfahren ist insbesondere im Hinblick auf die vom sogenannten Piperylenkonzentrat ausgehende Herstellung von Kohlenwasserstoffharzen von Interesse. Das Piperylenkonzentrat enthält eine Monomerzusammensetzung enthaltend mindestens ein Monomer ausgewählt aus der Gruppe bestehend aus cis-Piperylen, trans-Piperylen, Cyclopenten und/oder 2-Alkenen mit fünf Kohlenstoffatomen. Es ist im Wesentlichen frei von 1-Alkenen. Das Piperylenkonzentrat fällt beim Cracken von Erdölfraktionen als Nebenprodukt an und ist leicht zugänglich.

Es ist somit eine Aufgabe der vorliegenden Erfindung, ausgehend von einer Monomerzusammensetzung enthaltend mindestens ein Monomer ausgewählt aus der Gruppe bestehend aus cis-Piperylen, trans-Piperylen, Cyclopenten und 2-Alkenen mit fünf Kohlenstoffatomen, ein wirksames Verfahren zur Herstellung eines Kohlenwasserstoffharzes zur Verfügung zu stellen, welches die sich mit der oben beschriebenen homogenen Katalyse ergebenden Nachteile umgeht.

Diese Aufgabe wird erfindungsgemäss gelöst durch das Verfahren gemäss Anspruch 1. Bevorzugte Ausführungen des Verfahrens sind in den abhängigen Ansprüchen definiert.

Gemäss Anspruch 1 wird ein die Monomerzusammensetzung enthaltendes Kohlenwasserstoffgemisch mit einem Anteil an Isopren von weniger als 5 Gew.% bezogen auf das Gesamtgewicht des Kohlenwasserstoffgemisches in einem organischen Lösungsmittel gelöst, sodass der Anteil des organischen Lösungsmittels mindestens 35 Gew.% bezogen auf das Gesamtgewicht der erhaltenen Reaktionslösung beträgt, und die Reaktionslösung mit einer sauren ionischen Flüssigkeit in Kontakt gebracht, wodurch das Kohlenwasserstoffharz erhalten wird.

Es hat sich überraschenderweise gezeigt, dass das erfindungsgemässe Verfahren zu Produkten führt, die den marktüblichen Anforderungen gerecht werden und hinsichtlich Kettenlänge, Erweichungspunkt und Farbe den jeweiligen Vorgaben entsprechend gezielt hergestellt werden können. Zudem werden mit dem erfindungsgemässen Verfahren gute Raum-Zeit-Ausbeuten erzielt. Dies war unter anderem aufgrund der nicht voraussagbaren, sich je nach Ausgangsmaterial stark variierenden Wirkung von ionischen Flüssigkeiten für die beschriebene Reaktionslösung nicht zu erwarten.

Im Allgemeinen ist das als Ausgangsmaterial verwendete Kohlenwasserstoffgemisch, insbesondere das Piperylenkonzentrat, im Wesentlichen frei von 1-Alkenen. Unter Alkenen werden wie bereits erwähnt vom Fachmann Monoene verstanden (siehe etwa Römpp Chemie Lexikon, 9. Auflage, 1995, S. 104). 1-Alkene sind somit Monoene mit der Doppelbindung in Position 1. Der Begriff "im Wesentlichen frei" bedeutet dabei, dass der Anteil an 1-Alkenen im Kohlenwasserstoffgemisch weniger als 2 Gew.% beträgt.

Mit dem erfindungsgemässen Verfahren werden im Allgemeinen Kohlenwasserstoffharze erhalten, die bei -10°C wachsartig oder fest sind und sich von den aus der Polymerisation von 1-Alkenen erhaltenen Kohlenwasserstoffharzen, deren Pourpoint bei weit tieferer Temperatur liegt, grundlegend unterscheiden. Untersuchungen haben gezeigt, dass bei der Polymerisation gemäss der vorliegenden Erfindung in der Hauptkette cyclische Strukturen gebildet werden, während bei der Polymerisation von 1-Alkenen ausschliesslich lineare Strukturen gebildet werden.

Unter ionischen Flüssigkeiten werden in der Regel organische Salze verstanden, die unterhalb von 180°C flüssig sind. Sie besitzen keinen messbaren Dampfdruck, sind nicht entflammbar und weisen in der Regel eine hohe thermische Stabilität auf. Darüber hinaus sind sie in einem weiten Temperaturbereich flüssig und für die Zweiphasenkatalyse geeignet. Mittels der erfindungsgemäss verwendeten ionischen Flüssigkeit lassen sich somit die Vorteile homogener Katalysatorsysteme, nämlich die hohe Aktivität und Selektivität, mit den Vorteilen heterogener Katalysatorsysteme, nämlich die einfache Produktabtrennung, vereinen.

So kann nach erfolgter Polymerisation die saure ionische Flüssigkeit aufgrund der Nichtmischbarkeit mit der organischen Phase durch einfache Zweiphasentrennoperation als separate Phase von dieser abgetrennt und wiederverwendet werden. Dies ist von besonderer Bedeutung, da ionische Flüssigkeiten in der Regel schwer zugänglich und teuer sind. Zudem wird die weitere Aufarbeitung der das Produkt enthaltenden Reaktionslösung drastisch vereinfacht.

Weiterhin verfügen die ionischen Flüssigkeiten über hohe Wärmekapazitäten und können entstehende Reaktionswärme gut abführen. Bei den sauren ionischen Flüssigkeiten ist zudem die Lewis-Acidität in weiten Bereichen durch Modifikation des Moleküls einstellbar. Solche Modifikationen sind für einzelne saure ionischen Flüssigkeiten dem Fachmann bekannt und werden für Chloroaluminate beispielsweise von Carmichael, Adrian J.; Haddleton, David M.S. in "Polymer synthesis in ionic liquids" (aus Wasserscheid, P. und Welton T., "Ionic Liquids in Synthesis", 2003, S. 319 bis 335) beschrieben.

Das erfindungsgemässe Verfahren ist hinsichtlich Änderungen in der Zusammensetzung des als Ausgangsmaterial verwendeten Kohlenwasserstoffgemisches enthaltend Alkadiene, Cycloalkene und/oder 2-Alkene mit fünf Kohlenstoffatomen sehr tolerant. Durch Massschneidern der ionischen Flüssigkeit können zudem Änderungen im Kohlenwasserstoffgemisch berücksichtigt werden, ohne dass dies Verluste an der Reaktivität oder der Produktqualität zur Folge hätte.

Gemäss dem vorliegenden Verfahren werden Monomere unterschiedlicher Reaktivität in das Kohlenwasserstoffharz eingebaut; der Monomerumsatz ist daher gross. Die in der organischen Phase nebst dem gewünschten Kohlenwasserstoffharz in der Reaktionslösung enthaltenen nicht umgesetzten Monomer-Reste können zusammen mit etwaigen Oligomer-Resten und dem organischen Lösungsmittel sehr einfach mittels Vakuumdestillation vom gewünschten Kohlenwasserstoffharz abgetrennt werden.

Im Allgemeinen enthält das Kohlenwasserstoffgemisch einen Anteil an cis-Piperylen und/oder trans-Piperylen von 30 bis 80 Gew.%, bevorzugt von 35 bis 75 Gew.%, besonders bevorzugt von 40 bis 70 Gew.%.

Vorzugsweise beträgt das Massenverhältnis von Alkadien zu Alken im Kohlenwasserstoffgemisch ca. 3:1 bis 1:1, bevorzugter ca. 2,5:1 bis 1,25:1, besonders bevorzugt ca. 2,25:1 bis 1,5:1.

Im Allgemeinen beträgt der Anteil an Cyclopenten 2 bis 20 Gew.%, bevorzugt 5 bis 15 Gew.% bezogen auf das Gesamtgewicht des Kohlenwasserstoffgemischs.

Zudem umfasst das Kohlenwasserstoffgemisch vorzugsweise ein verzweigtes Alken, insbesondere 2-Methyl-2-buten. Dadurch wird gewährleistet, dass bei der Herstellung des Kohlenwasserstoffharzes kein Gel gebildet wird. Ohne an eine Theorie gebunden zu sein, wird angenommen, dass verzweigte Alkene als Kettenabbrecher der Polymerisation wirken.

Im Speziellen wird beim erfindungsgemässen Verfahren vom sogenannten Piperylenkonzentrat als Kohlenwasserstoffgemisch ausgegangen. Dieses ergibt sich als Nebenprodukt des Crackens von Erdölfraktionen und weist cis- und trans-Piperylen (cis- bzw. trans-1,3-Pentadien), Cyclopenten und 2-Methyl-2-buten als Monomere auf.

Ein beispielhaftes Piperylenkonzentrat weist 50 bis 60 Gew.% cis-Piperylen und/oder trans-Piperylen, 10 bis 20 Gew.% Cyclopenten, 7 bis 20 Gew.% 2-Methyl-2-buten und 2 bis 10 Gew.% Pentan auf. Allerdings können hinsichtlich der Konzentrationen der im Piperylenkonzentrat enthaltenen Komponenten je nach verwendeter Erdölqualität und Crackbedingung starke Schwankungen auftreten.

Der Anteil an Isopren im Piperylenkonzentrat ist üblicherweise geringer als 1 Gew.%. Im Allgemeinen weist das Piperylenkonzentrat zudem weniger als 7 Gew.% Cyclopentadien oder Dicyclopentadien, weniger als 0.5 Gew.% an gesättigten Kohlenwasserstoffverbindungen mit vier oder weniger Kohlenstoffatomen und weniger als 0.5 Gew.% an gesättigten Kohlenwasserstoffverbindungen mit sechs oder mehr Kohlenstoffatomen auf.

In einer weiteren bevorzugten Ausführungsform kann zum Kohlenwasserstoffgemisch, im Speziellen zum Piperylenkonzentrat, vor der Polymerisation als zusätzliches Monomer mindestens eine Kohlenwasserstoffverbindung ausgewählt aus der Gruppe aromatischer Kohlenwasserstoffe mit neun Kohlenstoffatomen (wie z.B. Vinyltoluol, Inden oder Alphamethylstyrol), Methylinden, Styrol oder Phenol hinzugefügt werden. In einem derart additivierten Kohlenwasserstoffgemisch beträgt der Anteil dieser zusätzlichen Monomere im Allgemeinen 2 bis 50 Gew.%, bevorzugt 5 bis 40 Gew. %. Damit können zielgerichtet gewünschte Eigenschaften, wie etwa eine bestimmte Molekulargewichtsverteilung oder eine definierte Verträglichkeit mit einem Matrixpolymer, im Endprodukt eingestellt werden. So umfasst die vorliegende Erfindung nebst der Herstellung rein aliphatischer Kohlenwasserstoffharze auch die Herstellung aromatisch modifizierter Kohlenwasserstoffharze.

Um weitere gewünschte Eigenschaften im Endprodukt erzielen zu können, umfasst das Kohlenwasserstoffgemisch in einer bevorzugten Ausführungsform mindestens eine Kohlenwasserstoffverbindung, die eine Hydroxylgruppe aufweist. In einem solchen Kohlenwasserstoffgemisch beträgt der Anteil an der die Hydroxylgruppe aufweisenden

Kohlenwasserstoffverbindung im Allgemeinen 2 bis 50 Gew.%, bevorzugt 5 bis 40 Gew.%. So kann beispielsweise Phenol vor der Polymerisation zum Kohlenwasserstoffgemisch hinzugefügt werden, um ein entsprechend additiviertes Kohlenwasserstoffgemisch zu erhalten. Damit kann zusätzlich die Verträglichkeit des Kohlenwasserstoffharzes mit den polymeren Matrixsystemen angepasst werden. Im konkreten Fall erlaubt es Phenol, eine Anpassung an hydrophile. Polymere zu erzielen.

Erfindungsgemäss wird das Kohlenwasserstoffgemisch, im Speziellen das Piperylenkonzentrat, in einem organischen Lösungsmittel gelöst. Dabei handelt es sich um nichtreaktive Kohlenwasserstoffe, die bei der Polymerisation nicht in das Kohlenwasserstoffharz eingebaut werden. Vorzugsweise ist das Lösungsmittel ausgewählt aus der Gruppe bestehend aus geradkettigen und verzweigten Alkanen, Alicyclen und nicht polymerisierbaren aromatischen Kohlenwasserstoffen wie beispielsweise Benzol oder Toluol. Bevorzugt wird als Lösungsmittel Pentan verwendet, besonders bevorzugt Hexan oder Heptan. Der Anteil des organischen Lösungsmittels in der erhaltenen Reaktionslösung beträgt mindestens 35 Gew.%, vorzugsweise mindestens 50 Gew.%, bezogen auf das Gesamtgewicht der Reaktionslösung.

Die derart erhaltene Reaktionslösung wird im Allgemeinen bei einer Temperatur zwischen -20°C und 60°C in Kontakt mit der sauren ionischen Flüssigkeit gebracht.

Ionische Flüssigkeiten im Sinne der vorliegenden Erfindung sind vorzugsweise Salze der allgemeinen Formel

$$[A]_n^+ \quad [Y]^{n-}$$

in der n für 1, 2, 3 oder 4 steht, $[A]^+$ für ein quartäres Ammonium-Kation, ein Sulfonium-Kation oder ein Phosphonium-Kation und $[Y]^{n-}$ für ein ein-, zwei-, drei-oder vierwertiges Anion steht; oder Gemische von diesen.

Vorzugsweise besitzen die ionischen Flüssigkeiten einen Schmelzpunkt von weniger als 180°C. Weiterhin bevorzugt liegt der Schmelzpunkt in einem Bereich von -100°C bis 150°C, mehr bevorzugt im Bereich von -50°C bis 120°C und weiterhin mehr bevorzugt unter 100°C.

Bei den erfindungsgemäßen ionischen Flüssigkeiten handelt es sich um organische Verbindungen, d.h. dass mindestens ein Kation oder ein Anion der ionischen Flüssigkeit einen organischen Rest enthält.

Verbindungen, die sich zur Bildung des Kations $[A]^+$ von ionischen Flüssigkeiten eignen, sind z.B. aus DE 102 02 838 A1 bekannt. So können solche Verbindungen Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder Stickstoff-Heterocyclus' ein Kation erzeugt werden. Die Quaternisierung kann durch Alkylierung des Stickstoffatoms erfolgen. Je nach verwendetem Alkylierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Geeignete Alkylreste, mit denen das Stickstoffatom in den Aminen oder Stickstoff-Heterocyclen beispielsweise

quaternisiert sein kann, sind $C_1$-$C_{18}$-Alkyl, bevorzugt $C_1$-$C_{10}$-Alkyl, besonders bevorzugt $C_1$-$C_6$-Alkyl und ganz besonders bevorzugt Methyl. Die Alkylgruppe kann unsubstituiert sein oder einen oder mehrere gleiche oder verschiedene Substituenten aufweisen.

Bevorzugt sind solche Verbindungen, die mindestens einen fünf- bis sechsgliedrigen Heterocyclus, insbesondere einen fünfgliedrigen Heterocyclus, enthalten, der mindestens ein Stickstoffatom sowie gegebenenfalls ein Sauerstoff- oder Schwefelatom aufweist, besonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterocyclen.

Besonders bevorzugte Verbindungen sind solche, die ein Molgewicht unter 1000 g/mol aufweisen, ganz besonders bevorzugt unter 500 g/mol.

Weiterhin sind solche Kationen bevorzugt, die ausgewählt sind aus den Verbindungen der Formeln (IVa) bis (IVw),

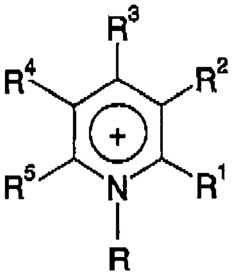

(IVa)

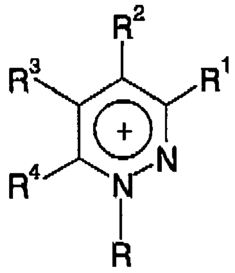

(IVb)

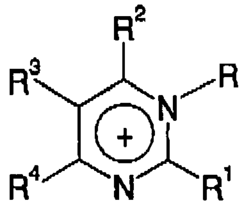

(IVc)

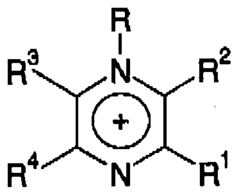

(IVd)

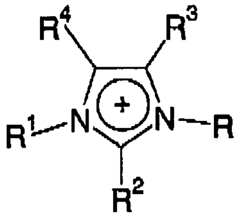

(IVe)

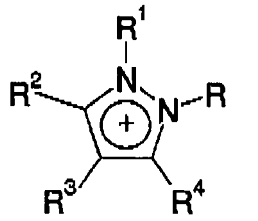

(IVf)

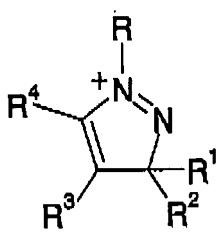

(IVg)

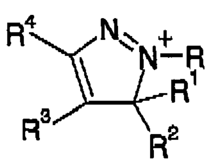

(IVg')

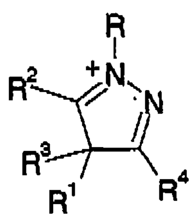

(IVh)

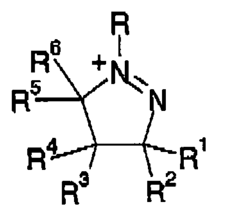

(IVi)

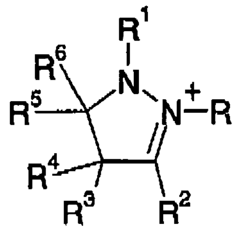

(IVj)

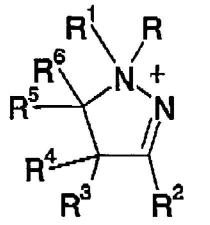

(IVj')

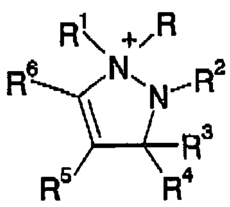

(IVk)

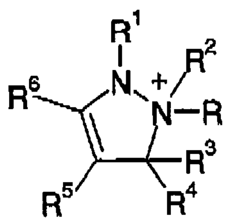

(IVk')

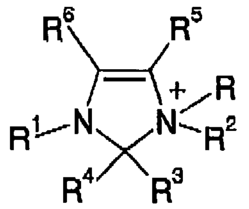

(IVl)

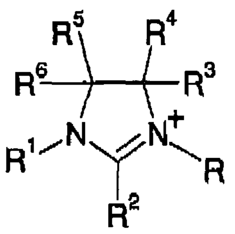

(IVm)

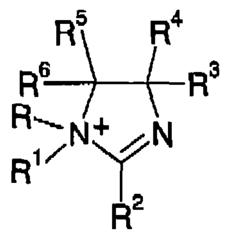

(IVm')

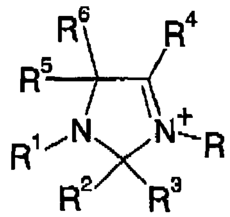

(IVn)

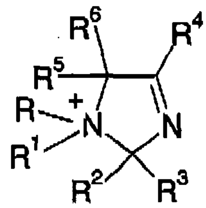

(IVn')

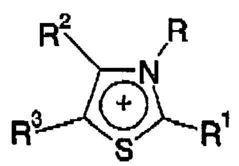

(IVo)

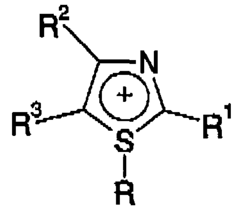

(IVo')

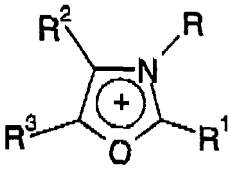

(IVp)

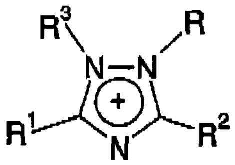

(IVq)

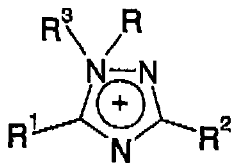

(IVq')

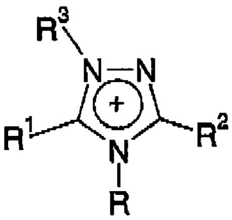

(IVq")

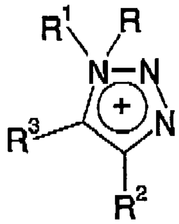

(IVr)

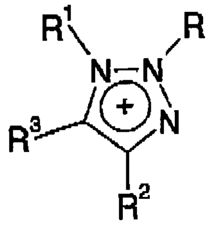

(IVr')

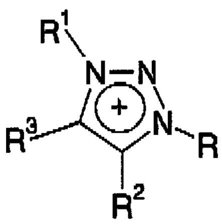

(IVr")

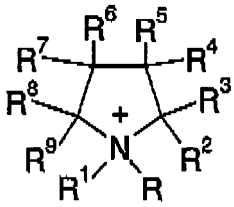

(IVs)

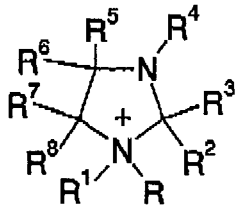

(IVt)

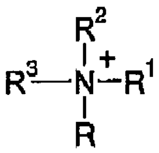

(IVu)

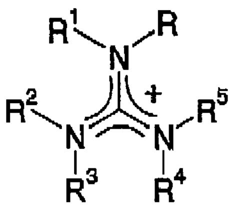

(IVv)

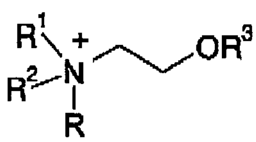

(IVw)

sowie Oligomere, die diese Strukturen enthalten.

Weitere geeignete Kationen sind Verbindungen der allgemeinen Formel (IVx) und (IVy)

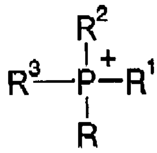

(IVx)

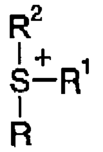

(IVy)

sowie Oligomere, die diese Struktur enthalten.

In den oben genannten Formeln (IVa) bis (IVy) stehen

der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen; und

die Reste $R^1$bis $R^9$ unabhängig voneinander für Wasserstoff, eine Sulfo-Gruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen, wobei die Reste $R^1$ bis $R^9$, welche in den oben genannten Formeln (IV) an ein Kohlenstoffatom (und nicht an ein Heteroatom) gebunden sind, zusätzlich auch für Halogen oder eine funktionelle Gruppe stehen können; oder

zwei benachbarte Reste aus der Reihe $R^1$ bis $R^9$ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder geeignete funktionelle Gruppen unterbrochenen oder substituierten Rest mit 1 bis 30 Kohlenstoffatomen.

Als Heteroatome kommen bei der Definition der Reste R und $R^1$ bis $R^9$ prinzipiell alle Heteroatome in Frage, welche in der Lage sind, formell eine $-CH_2-$, eine -CH=, eine -C= oder eine =C= -Gruppe zu ersetzen. Enthält der Kohlenstoff enthaltende Rest Heteroatome, so sind Sauerstoff, Stickstoff, Schwefel, Phosphor und Silizium bevorzugt, insbesondere Sauerstoff oder Stickstoff.

Als funktionelle Gruppen kommen prinzipiell alle funktionellen Gruppen in Frage, welche an ein Kohlenstoffatom oder ein Heteroatom gebunden sein können, beispielsweise um -CN (Cyano) oder -COO-R'' (Ester), wobei es sich bei dem Rest R' um den verbleibenden Teil des Kohlnestoff enthaltenden Restes handelt.

Als Halogene seien Fluor, Chlor, Brom und Iod genannt.

Bevorzugt steht der Rest R sowie die Reste $R^1$ bis $R^9$ unabhängig für

unverzweigtes oder verzweigtes, unsubstituiertes oder ein bis mehrfach mit Halogen, Phenyl, Cyano, oder $C_1$-$C_6$-Alkoxycarbonyl substituiertes $C_1$-$C_{18}$-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-l-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyll-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl und Undecylfluorisopentyl;

sowie in den Formeln IVa bis IVd, IVg bis IVi, IVo bis IVp für die Reste $R^1$ bis $R^9$ zusätzlich für Wasserstoff;

sowie in den Formeln IVe bis IVf, IVj, IVj', IVm bis IVn' und IVr bis IVs für die Reste $R^2$ bis $R^9$ zusätzlich für Wasserstoff;

sowie in den Formeln IVk bis IVl für die Reste $R^3$ bis $R^9$ zusätzlich Wasserstoff;

sowie in den Formeln IVq bis Ivq'' für die Reste $R^2$, $R^3$ und $R^5$ bis $R^8$ zusätzlich für Wasserstoff; und

sowie in der Formel IVt'' für die Reste $R^1$ und $R^2$ zusätzlich für Wasserstoff;

Als Anionen sind prinzipiell alle Anionen einsetzbar.

Das Anion $[Y]^{n-}$ der ionischen Flüssigkeit ist beispielsweise ausgewählt aus

- der Gruppe der Halogenide und halogenhaltigen Verbindungen der Formel:
  $F^-$, $Cl^-$, $Br^-$, $I^-$, $BF_4^-$, $PF_6^-$, $AlCl_4^-$, $Al_2Cl_7^-$, $Al_3Cl_{10}^-$, $AlBr_4^-$, $FeCl_4^-$, $BCl_4^-$, $SbF_6^-$, $AsF_6$, $^-ZnCl3^-$, $SnCl_3^-$, $CuCl_2^-$, $CF_3SO_3^-$, $CF_3CO_2^-$, $CCl_3CO_2^-$, $CN^-$, $SCN^-$, $OCN^-$

- der Gruppe der Sulfate, Sulfite und Sulfonate der allgemeinen Formel: $SO_4^2$, $HSO_4$, $SO_3^{2-}$, $HSO_3^-$, $R^aOSO_3$ -, $R^aSO_3^-$

- der Gruppe der Phosphate der allgemeinen Formel $PO^{3-}{}_4$, $HPO_4^{2-}$, $H_2PO_4$, $R^3PO_4$, $HR^apO_4^-$, $R^aR^bPO_4^-$

- der Gruppe der Phosphonate und Phosphinate der allgemeinen Formel: $R^aHPO_3^-$, $R^aR^bPO_2^-$, $R^aR^bPO_3^-$

- der Gruppe der Phosphite der allgemeinen Formel: $PO_3^{3-}$, $HPO_3^{2-}$, $H_2PO_3^-$, $R^aPO_3^{2-}$, $R^aHPO_3^-$, $R^aR^bPO_3^-$

- Gruppe der Phosphonite und Phosphinite der allgemeinen Formel: $R^aR^bPO_2$ $R^aHPO_2^-$, $R^aR^bPO^-$, $R^aHPO^-$

- der Gruppe der Carbonsäuren der allgemeinen Formel: $R^aCOO^-$

- der Gruppe der Borate der allgemeinen Formel: $BO_3^{3-}$, $HBO_3^{2-}$, $H_2BO_3^-$, $R^aR^bBO_3^-$, $R^aHBO_3^-$, $R^aBO_3^{2-}$ $B(OR^a)$ $(OR^b)$ $(OR^c)$ $(OR^d)^-$, $B(HSO_4)^-$, $B(R^aSO_4)^-$

- der Gruppe der Boronate der allgemeinen Formel: $R^aBO_2^{2-}$, $R^aR^bBO^-$

- der Gruppe der Carbonate und Kohlensäureester der allgemeinen Formel: $HCO_3^-$, $CO_3^{2-}$ $R^aCO_3^-$

- der Gruppe der Silikate und Kieselsäuresäureester der allgemeinen Formel: $siO_4^{4-}$, $HSiO_4^{3-}$, $H_2SiO_4^{2-}$, $H_3SiO_4^-$, $R^aSiO_4^{3-}$, $R^aR^bSiO_4^{2-}$, $R^aR^bR^cSiO4^-$, $HR^aSiO_4^{2-}$, $H_2R^aSiO_4^-$, $HR^aR^bSiO_4^-$

- der Gruppe der Halometallate der allgemeinen Formel $[M_gHaL_r]^{s-}$,

wobei M für ein Metall und Hal für Fluor, Chlor, Brom oder Iod steht, q und r ganze positive Zahlen sind und die Stöchiometrie des Komplexes angeben und s eine ganze positive Zahl ist und die Ladung des Komplexes angibt.

Darin bedeuten $R^a$, $R^b$, $R^c$ und $R^d$ unabhängig voneinander jeweils Wasserstoff, $C_1$-$C_{30}$-Alkyl, gegebenenfalls durch ein oder mehrere nicht-benachbarte Sauerstoff- und/oder Schwefelatome und/oder ein oder mehrere substituierte Iminogruppen unterbrochenes $C_2$-$C_{18}$-Alkyl, $C_6$-$C_{14}$-Aryl, $C_9$-$C_{12}$-Cycloalkyl oder einen fünf- bis sechsgliedrigen, Sauerstoff-, Stickstoff- und/oder Schwefelatome aufweisenden Heterocyclus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch geeignete funktionelle Gruppen, Aryl, Alkyl, Aryloxy, Alkyloxy, Halogen, Heteroatome und/oder Heterocyclen substituiert sein können. Vorzugsweise stehen $R^a$, $R^b$, $R^c$ und $R^d$ unabhängig voneinander jeweils Wasserstoff oder C1-$C_{30}$-Alkyl, insbesondere $C_1$-$C_6$-Alkyl.

Bevorzugte Anionen sind Chlorometallate, insbesondere von Aluminium, Titan, Gallium, Indium, Eisen, Cobalt, Nickel, Hafnium, Zirkonium, Kupfer, Zink, Vanadium, Chrom und Mangan.

In einer bevorzugten. Ausführungsform der Erfindung wird eine saure ionische Flüssigkeit der allgemeinen Formel
$[A]_n^+[Y]^{n-}$ eingesetzt, in der
$[A]_n^+$ ein Pyridinium der Formel IVa, ein Imidazolium der Formel IVe, ein Pyrazolium der Formel IVf oder IVg oder IVg', ein Ammonium der Formel IVu, ein Cholinium der Formel Ivw oder ein Phosphonium der Formel IVy; und
$[Y]^{n-}$ ein Chloroaluminat
ist.

Vorzugsweise werden hierbei saure ionische Flüssigkeiten der allgemeinen Formel I mit $[A]_n^+[Y]^{n-}$ eingesetzt, in der $[A]_n^+$für ein Pyridinium der Formel IVa steht.

Ganz besonders bevorzugt setzt man hierbei als Pyridiniumionen (IVa) solche ein, bei denen

- einer der Reste $R^1$ bis $R^5$ Methyl oder Ethyl ist und die verbleibenden Reste $R^1$ bis $R^5$ Wasserstoff sind;

- alle Reste $R^1$ bis $R^5$ Wasserstoff sind.

Ebenso vorzugsweise werden hierbei saure ionische Flüssigkeiten der allgemeinen Formel I mit $[A]_n^+[Y]^{n-}$ eingesetzt, in der
$[A]_n^+$ für ein Imidazolium der Formel IVe steht.
Ganz besonders bevorzugt setzt man als Imidazoliumionen (IVe) solche ein, bei denen

- $R^1$ Methyl, Ethyl, 1-Propyl, 1-Butyl, 1-Pentyl, 1-Hexyl oder 1-Octyl, und $R^2$ bis $R^4$ unabhängig voneinander Wasserstoff, Methyl oder Ethyl sind.

Als ganz besonders bevorzugte Imidazoliumionen (IVe) seien genannt 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethyl-imidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazoliurn, 1-(1-Hexadecyl)-3-octylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,3,4-Trimethylimidazolium, 1,4-Dimethyl-3-ethylimidazolium, 1,4-Dimethyl-3-octylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octylimidazolium.
Ebenso vorzugsweise werden hierbei saure ionische Flüssigkeiten der allgemeinen Formel I mit $[A]_n^+[Y]^{n-}$ eingesetzt, in der
$[A]_n^+$ für ein Pyrazolium der Formel IVf steht.
Ganz besonders bevorzugt setzt man als Pyrazoliumionen (IVf) solche ein, bei denen

- $R^1$ Methyl oder Ethyl ist und $R^2$ bis $R^4$ unabhängig voneinander Wasserstoff oder Methyl sind.

Ebenso vorzugsweise werden hierbei saure ionische Flüssigkeiten der allgemeinen Formel I mit $[A]_n^+[Y]^{n-}$ eingesetzt, in der
$[A]_n^+$ für ein Ammonium der Formel IVu steht.
Ganz besonders bevorzugt setzt man als Ammoniumionen (IVu) solche ein, bei denen

- $R^1$ bis $R^3$ unabhängig voneinander $C_1$- bis $C_{18}$-Alkyl sind; oder

- $R^1$ und $R^2$ zusammen 1,5-Pentylen oder 3-Oxa-1,5-pentylen sind und $R^3$ $C_1$-$C_{18}$-Alkyl oder 2-Cyanoethyl ist.

Als ganz besonders bevorzugte Ammoniumionen (IVu) seien genannt Methyl-tri-(1-butyl)-ammonium, N,N-Dimethylpiperidinium und N,N-Dimethylmorpholinium.
Beispiele für die tertiären Amine, von denen sich die quartären Ammoniumionen der allgemeinen Formel (IVu) durch Quaternisierung mit den genannten Resten R ableiten, sind Diethyl-n-butylamin, Diethyl-tert-butylamin, Diethyl-n-pentylamin, Diethyl-hexylamin, Diethyloctylamin, Diethyl-(2-ethylhexyl)-amin, Di-n-propylbutylamin, Di-n-propyl-n-pentylamin, Di-n-propylhexylamin, Di-n-propyloctylamin, Di-n-propyl-(2-ethylhexyl)-amin, Di-isopropylethylamin, Di-iso-propyl-n-propylamin, Di-isopropyl-butylamin, Diisopropylpentylamin, Di-iso-propylhexylamin, Diisopropyloctylamin, Di-iso-propyl-(2-ethylhexyl)-amin, Din-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butyl-pyrrolidin, N-sek-Butylpyrrodidin, N-tert-Butylpyrrolidin, N-n-Pentylpyrrolidin, N,N-Dimethylcyclohexylamin, N,N-Diethylcyclohexylamin, N,N-Di-n-butylcyclohexylamin, N-n-Propylpiperidin, N-iso-Propylpiperidin, N-n-Butylpiperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzylamin, Di-n-butylbenzylamin, Diethylphenylamin, Di-n-Propylphenylamin und Di-n-Butylphenylamin.
Bevorzugte quartäre Ammoniumsalze der allgemeinen Formel (IVu) sind solche, die sich von folgenden tertiären Aminen durch Quärternisierung mit den genannten Resten R ableiten lassen, wie Di-iso-propylethylamin, Diethyl-tert-butylamin, Di-iso-propylbutylamin, Di-n-butyl-n-pentylamin, N,N-Di-n-butylcyclohexylamin sowie tertiäre Amine aus Pentylisomeren.
Besonders bevorzugte tertiäre Amine sind Di-n-butyl-n-pentylamin und tertiäre Amine aus Pentylisomeren.
Ebenso vorzugsweise werden hierbei saure ionische Flüssigkeiten der allgemeinen Formel I mit $[A]_n^+[Y]^{n-}$

eingesetzt, in der
$[A]_n^+$ für ein Cholinium der Formel IVw steht.

Ganz besonders bevorzugt setzt man als Choliniumionen (IVw) solche ein, bei denen

- $R^1$ und $R^2$ unabhängig voneinander Methyl, Ethyl, 1-Butyl oder 1-Octyl sind und $R^3$ Methyl, Ethyl oder Acetyl ist;
- $R^1$ Methyl, Ethyl, 1-Butyl oder 1-Octyl ist, $R^2$ eine - $CH_2$-$CH_2$-$OR^4$-Gruppe ist und $R^3$ und $R^4$ unabhängig voneinander Wasserstoff, Methyl, Ethyl oder Acetyl, sind; oder
- $R^1$ eine -$CH_2$-$CH_2$-$OR^4$-Gruppe ist, $R^2$ eine _$CH_2$-$CH_2$-$OR^5$-Gruppe ist und $R^3$ bis $R^5$ unabhängig voneinander Methyl, Ethyl oder Acetyl sind.

Besonders bevorzugte Choliniumionen (IVw) sind solche, bei denen $R^3$ ausgewählt ist aus Methyl, Ethyl oder Acetyl, insbesondere Methyl oder Ethyl.

Ebenso vorzugsweise werden hierbei saure ionische Flüssigkeiten der allgemeinen Formel I mit $[A]_n^+[Y]^{n-}$ eingesetzt, in der
$[A]_n^+$ für ein Phosphonium der Formel IVy steht.

Ganz besonders bevorzugt setzt man als Phosphoniumionen (Ivy) solche ein, bei denen

- $R^1$ bis $R^3$ unabhängig voneinander $C_1$-$C_{18}$-Alkyl, insbesondere Butyl, Isobutyl, 1-Hexyl oder 1-Octyl sind.

Vorzugsweise werden hierbei saure ionische Flüssigkeiten der allgemeinen Formel I mit $[A]_n^+[Y]^{n-}$ eingesetzt, in der
$[Y]^{n-}$ für $AlCl_4^-$, $Al_2Cl_7^-$, $Al_3Cl_{10}^-$
steht.

Für die vorliegende Erfindung eignet sich als saure ionische Flüssigkeit insbesondere 1-Ethyl-3-methylimidazoliumchloroaluminat und/oder 1-Ethyl-3-butylimidazoliumchloroaluminat.

Durch intensive Vermischung der Reaktionslösung und der sauren ionischen Flüssigkeit wird die Polymerisation gestartet. Im Allgemeinen beträgt der Anteil an der sauren ionischen Flüssigkeit in der erhaltenen Reaktionsmischung 0,05 bis 15 Gew.%, bevorzugt 0,1 bis 10 Gew.% und besonders bevorzugt 0,2 bis 8 Gew.%.

Üblicherweise wird mit dem Verfahren der vorliegenden Erfindung ein zahlengewichtetes mittleres Molekulargewicht $M_n$ von ca. 1200 und ein massengewichtetes mittleres Molekulargewicht $M_w$ von ca. 3000 angestrebt.

Das zahlengewichtete Molekulargewicht ist so definiert, dass die Masse jedes einzelnen vorkommenden Moleküls bei der Bildung des Mittelwertes mit der Zahl von Molekülen dieser Masse gemäss der folgenden Formel gewichtet wird:

$$M_n = \frac{1}{N} \sum_i N_i M_i$$

Dabei bezeichnet $N_i$ die Zahl der Moleküle in der Probe mit der Masse $M_i$ und N die Gesamtzahl der Moleküle, aus denen die Probe besteht.

Das massengewichtete Molekulargewicht ist der Mittelwert, der erhalten wird, wenn das Molekulargewicht eines Moleküls mit seinem Massenanteil an der gesamte Probe gemäss der folgenden Formel gewichtet wird:

$$M_w = \frac{1}{m} \sum_i m_i M_i$$

Dabei bezeichnet $m_i$ die Gesamtmasse aller Moleküle mit der Molmasse $M_i$ und m die Gesamtmasse der Probe.

Zur Beendigung der Polymerisation wird die Vermischung der Reaktionslösung und der sauren ionischen Flüssigkeit unterbrochen, worauf die saure ionische Flüssigkeit aufgrund ihrer Nichtmischbarkeit mit der organischen Reaktionslösung und der grösseren Dichte nach unten sinkt und eine separate Phase bildet. Diese kann sehr einfach abgetrennt werden.

Die abgetrennte ionische Flüssigkeit kann weiterverwendet werden. Verluste an saurer ionischer Flüssigkeit

mit $[Y]^{n-}$-Anionen vom Halometallat-Typ, welche durch Abspaltung eines entsprechenden neutralen Halometallsalzes verursacht werden, können durch Zugabe des entsprechenden Halometallsalzes kompensiert werden. So können beispielsweise Verluste an ionischer Flüssigkeit vom Chloroaluminat-Typ kompensiert werden, indem entsprechende Mengen an Aluminiumtrichlorid zudosiert werden. Diese so erhaltene ionische Flüssigkeit kann weiter eingesetzt werden.

Die als Monomer-Polymer-Lösungsmittelmischung vorliegende Reaktionslösung kann mittels Zugabe einer Base einem "Quenching" unterzogen werden, um im Harz gebundene Aluminiumchloridreste zu entfernen. Weiter kann gelöstes Aluminiumchlorid entfernt werden, indem die organische Phase mit Wasser gewaschen wird.

Die gereinigte Monomer-Polymer-Lösungsmittelmischung wird daraufhin üblicherweise einer Vakuumdestillation unterworfen, um nicht reagierte Monomere, nicht vollständig reagierte Oligomere und das Lösungsmittel zu entfernen.

Im Allgemeinen entstehen beim Verfahren der vorliegenden Erfindung Kohlenwasserstoffharze, die Restdoppelbindungen enthalten. Je nach Anwendungsbereich ist es erwünscht, diese zu hydrieren oder im Kohlenwasserstoffharz zu belassen. So kann das Kohlenwasserstoffharz mittels Hydrierung entfärbt werden. Demgegenüber ermöglichen Kohlenwasserstoffharze, in denen die Restdoppelbindungen belassen werden, eine reaktive Einbindung in eine Polymermatrix über kovalente Bindungen. Damit geht einerseits eine erhöhte Kompatibilität zwischen der Polymermatrix und dem Kohlenwasserstoffharz einher, andrerseits wird eine spätere Migration des Kohlenwasserstoffharzes innerhalb der hochmolekularen Polymermatrix unterbunden.

## Beispiele

Die folgenden Beispiele veranschaulichen die vorliegende Erfindung:

### Beispiel 1: kontinuierliche Verharzung eines Piperylenkonzentrates

Gemäss Beispiel 1 wird eine ionische Flüssigkeit (IL) bestehend aus einem Mol 1-Ethyl-3-methylimidazoliumchlorid und zwei Mol Aluminiumchlorid als saurer Initiator für die Verharzung eines mit 2-Methyl-2-buten additivierten Piperylenkontrates verwendet.

Das verwendete additivierte Piperylenkonzentrat weist eine Zusammensetzung gemäss Tabelle 1 auf.

Tabelle 1- Zusammensetzung des additivierten Piperylenkonzentrates

| **Substanz** | **Gewichtsanteil (Gew.%)** |
|---|---|
| 2-Methyl-1-buten | <2 |
| 2-Methyl-2-buten | 20 |
| 2-Penten | 1 |
| cis- und trans- 1,3-Pentadien | 54 |
| Cyclopenten | 14 |
| Isopren | < 0,5 |
| Cyclopentadien und Dicyclopentadien | < 4 |
| gesättigte C5- und C6-Alkane und Cyclopentan | < 7 |

Das Piperylenkonzentrat gemäss Tabelle 1 wird mit n-Heptan vermischt, sodass eine Reaktionslösung enthaltend 20 Gew.% des additivierten Piperylenkonzentrats und 80 Gew.% n-Heptan vorliegt. Ein mit einem Strombrecher und einem Kreuzbalkenrührer ausgestatteter Reaktor mit einem Überlauf am oberen Rand und einem Füllvolumen von 600 ml wird kontinuierlich mit 6,35 g/h der oben beschriebenen ionischen Flüssigkeit und 408 g/h einer Mischung aus 20 Gew.% additiviertem Piperylenkonzentrat gemäss Tabelle 1 und 80 Gew.% des Lösungsmittels n-Heptan als Reaktionslösung befüllt. Die ionische Flüssigkeit und das Piperylen/n-Heptan-Gemisch sind nicht mischbar. Unter intensivem Rühren mit Hilfe des Strombrechers und des Kreuzbalkenrührers wird die Verharzung bei 15°C durchgeführt, indem das Piperylen/n-Heptan-Gemisch und die ionische Flüssigkeit miteinander in Kontakt gebracht werden. Die Wärmetönung durch die exotherme Reaktion wird durch Gegenkühlung so weit kompensiert, dass die Temperatur in engen Grenzen konstant gehalten wird. Das überlaufende Gemisch (mit einer mittleren Verweilzeit im Reaktor von zwei Stunden) trennt sich in einer Absetzeinheit schnell aufgrund des hohen Dichteunterschiedes, sodass die ionische Flüssigkeit und die Reaktionslösung enthaltend das Produkt und die nicht reaktiven Komponenten des Piperylenkonzentrates in n-Heptan in separaten Phase erhalten werden. Nachdem sich die Reaktion im Gleichgewicht befindet, wird die Reaktionslösung enthaltend das Produkt und die nicht reaktiven Komponenten des Piperylenkonzentrates in n-Heptan zur

weiteren Aufarbeitung und vollständigen Deaktivierung restlicher Mengen an mitgeschlepptem oder eingebundenem Aluminiumchlorid nacheinander mit 10 Gew.%iger Natronlauge und (nach Abtrennung der alkalischwässrigen Phase) anschliessend mit Calciumoxid behandelt. Nach dem Abfiltrieren des Calciumoxides wird das Produkt-Lösungsmittelgemisch einer Vakuumdestillation bei einer Maximaltemperatur von 240°C unterworfen, um sämtliche Lösungsmittel und kurzkettigen Oligomere zu entfernen. Nach dem Abkühlen wird ein gelbes Harz mit einem Erweichungspunkt von 112°C erhalten. Gemäss der gaschromatographischen Analyse der destillativ abgetrennten; leicht flüchtigen Komponenten kann geschlossen werden, dass ca. 95% der Monomere umgesetzt worden sind. Die isolierte Ausbeute beträgt 83% der Theorie. Die mittlere Molmasse $M_W$ des Harzes beträgt 3640.

**Beispiel 2: Batch-Verharzung eines Piperylenkonzentrates**

In einem 500 ml Vierhalskolben wird als ionische Flüssigkeit (Initiator) ein Gemisch aus 5 g 1-Ethyl-3-Methylimidazoliumtetrachloroaluminat und 5 g 1-Ethyl-3-Methylimidazoliumhepatachlorodialuminat vorgelegt. 100 g Piperylenkonzentrat (Zusammensetzung gemäss Tabelle 1) werden in 100 g n-Heptan aufgelöst und unter Rühren zu der ionischen Flüssigkeit getropft. Die Reaktion verläuft exotherm, die Temperatur wird durch Eiskühlung bei 20°C gehalten. Der Ansatz wird trüb und verfärbt sich orange. Nach dem Ende der Zudosierung lässt man unter Rühren noch 60 Minuten nachreagieren und trennt am Ende nach dem Abstellen des Rührens die ionische Flüssigkeit von der Heptan-Produktphase ab. Die Heptan-Produktphase wird durch Destillation vom Lösungsmittel befreit. Es wird ein dunkelgelbes Harz mit einer isolierten Ausbeute von 71 % gewonnen. Der Erweichungspunkt des Harzes beträgt 116 C.

**Beispiel 3: Batch-Verharzung eines Piperylenkonzentrates**

In einem 500 ml Vierhalskolben wird als ionische Flüssigkeit (Initiator) ein Gemisch aus 6 g 1-Ethyl-3-Methylimidazoliumtetrachloroaluminat und 4 g 1-Ethyl-3-Methylimidazoliumheptachlorodialuminat vorgelegt. 100 g Piperylenkonzentrat (Zusammensetzung gemäss Tabelle 1) werden in 100 g n-Heptan aufgelöst. Die ionische Flüssigkeit und das gelöste Piperylenkonzentrat werden auf 0°C abgekühlt. Dann wird das gelöste Piperylenkonzentrat unter Rühren bei 0°C zu der ionischen Flüssigkeit getropft. Die Reaktion verläuft exotherm, die Temperatur wird durch Eiskühlung bei 0°C gehalten. Der Ansatz wird trüb und verfärbt sich orange. Nach dem Ende der Zudosierung lässt man unter Rühren noch 60 Minuten bei 0°C nachreagieren. Nach dem Aufwärmen des Ansatzes auf Raumtemperatur wird der Rührer abgestellt und die ionische Flüssigkeit von der Heptan-Produktphase abgetrennt. Die Heptan-Produktphase wird durch Destillation vom Lösungsmittel befreit. Es wird ein dunkelgelbes Harz mit einer isolierten Ausbeute von 72% gewonnen. Der Erweichungspunkt beträgt 116 °C.

**Beispiel 4 (vergleichsbeispiel): Versuch der verharzung eines isoprenreichen C5-Schnittes**

Als Vergleichsbeispiel wurde ein isoprenreiches Kohlenwasserstoffgemisch gemäss Tabelle 2 als Ausgangsmaterial entsprechend den in Beispiel 1 beschriebenen Bedingungen behandelt. Zulaufdosierungen und Temperatur waren identisch.

Tabelle 2: Zusammensetzung des isoprenreichen Kohlenwasserstoffgemisches

| **Substanz** | **Gewichtsanteil (Gew.%)** |
|---|---|
| 2-Methyl-1-buten | 5 |
| 2-Methyl-2-buten | 3,1 |
| 2-Penten | 3,1 |
| cis- und trans- 1,3-Pentadien | 23,5 |
| Cyclopenten | 2,7 |
| Isopren | 16,7 |
| Cyclopentadien und Dicyclopentadien | 2 |
| gesättigte C5- und C6-Alkane und Cyclopentan | 43,6 |

Diese Umsetzung des oben definierten Kohlenwasserstoffgemisches führte zu einer Verharzung in der ionischen Flüssigkeit, so dass eine Auftrennung der Komponenten nicht möglich war. Die vorher gut fliessfähige ionische Flüssigkeit wurde fest und verstopfte sämtliche Reaktorleitungen.

## Patentansprüche

1. Verfahren zur Herstellung eines Kohlenwasserstoffharzes durch Polymerisation einer Monomerzusammensetzung enthaltend mindestens ein Monomer ausgewählt aus der Gruppe bestehend aus cis-Piperylen, trans-Piperylen, Cyclopenten und 2-Alkenen mit fünf Kohlenstoffatomen, wobei ein die Monomerzusammensetzung enthaltendes Kohlenwasserstoffgemisch mit einem Anteil an Isopren von weniger als 5 Gew.% bezogen auf das Gesamtgewicht des Kohlenwasserstoffgemischs in einem organischen Lösungsmittel zur Herstellung einer Reaktionslösung gelöst wird, sodass der Anteil des organischen Lösungsmittels mindestens 35 Gew.% bezogen auf das Gesamtgewicht der erhaltenen Reaktionslösung beträgt, und die Reaktionslösung mit einer sauren ionischen Flüssigkeit in Kontakt gebracht wird, wodurch das Kohlenwasserstoffharz erhalten wird.

2. Verfahren nach Anspruch 1 zur Herstellung eines Kohlenwasserstoffharzes, das bei -10°C wachsartig oder fest ist.

3. Verfahren nach Anspruch 1 oder 2, **dadurch gekennzeichnet, dass** das Kohlenwasserstoffgemisch im Wesentlichen frei von 1-Alkenen ist.

4. Verfahren nach einem der vorhergehenden Ansprüche, **dadurch gekennzeichnet, dass** die Monomerzusammensetzung im Wesentlichen aus mindestens einem Monomer ausgewählt aus der Gruppe bestehend aus cis-Piperylen, trans-Piperylen, Cyclopenten und 2-Alkenen mit fünf Kohlenstoffatomen besteht.

5. Verfahren nach einem der vorhergehenden Ansprüche, **dadurch gekennzeichnet, dass** das Kohlenwasserstoffgemisch einen Anteil an cis-Piperylen und/oder trans-Piperylen von 30 bis 80 Gew.%, bevorzugt von 35 bis 75 Gew. %, besonders bevorzugt von 40 bis 70 Gew.% enthält.

6. Verfahren nach einem der vorhergehenden Ansprüche, **dadurch gekennzeichnet, dass** das Massenverhältnis von Alkadien zu Alken im Kohlenwasserstoffgemisch 3:1 bis 1:1, bevorzugter 2,5:1 bis 1,25:1, besonders bevorzugt 2,25:1 bis 1,5:1 beträgt.

7. Verfahren nach einem der vorhergehenden Ansprüche, **dadurch gekennzeichnet, dass** der Anteil an Cyclopenten 2 bis 20 Gew.%, bevorzugt 5 bis 15 Gew.% bezogen auf das Gesamtgewicht des Kohlenwasserstoffgemischs beträgt.

8. Verfahren nach einem der vorhergehenden Ansprüche, **dadurch gekennzeichnet, dass** das Kohlenwasserstoffgemisch ein verzweigtes Alken umfasst.

9. Verfahren nach einem der vorhergehenden Ansprüche, **dadurch gekennzeichnet, dass** das Kohlenwasserstoffgemisch 50 bis 60 Gew.% cis-Piperylen und/oder trans-Piperylen, 10 bis 20 Gew.% Cyclopenten, 7 bis 20 Gew.% 2-Methyl-2-buten und 2 bis 10 Gew.% Pentan enthält.

10. Verfahren nach einem der vorhergehenden Ansprüche, **dadurch gekennzeichnet, dass** das Kohlenwasserstoffgemisch weniger als 7 Gew.% Cyclopentadien oder Dicyclopentadien, weniger als 1 Gew.% Isopren, weniger als 0.5 Gew.% an gesättigten Kohlenwasserstoffverbindungen mit vier oder weniger Kohlenstoffatomen und weniger als 0.5 Gew.% an gesättigten Kohlenwasserstoffverbindung mit sechs oder mehr Kohlenstoffatomen umfasst.

11. Verfahren nach einem der vorhergehenden Ansprüche, **dadurch gekennzeichnet, dass** zum Kohlenwasserstoffgemisch vor der Polymerisation als zusätzliches Monomer mindestens eine Kohlenwasserstoffverbindung ausgewählt aus der Gruppe aromatischer Kohlenwasserstoffe mit neun Kohlenstoffatomen, Methylinden, Styrol oder Phenol hinzugefügt wird, so dass im derart additivierten Kohlenwasserstoffgemisch der Anteil an zusätzlichem Monomer 2 bis 50 Gew.%, bevorzugt 5 bis 40 Gew.% beträgt.

12. Verfahren nach einem der vorhergehenden Ansprüche, **dadurch gekennzeichnet, dass** der Anteil des organischen Lösungsmittels mindestens 50 Gew.% bezogen auf das Gesamtgewicht der Reaktionslösung beträgt.

13. Verfahren nach einem der vorhergehenden Ansprüche, **dadurch gekennzeichnet, dass** das organische Lösungsmittel ausgewählt ist aus der Gruppe bestehend aus geradkettigen und verzweigten Alkanen, Alicyclen und nicht polymerisierbaren aromatischen Kohlenwasserstoffen.

14. Verfahren nach einem der vorhergehenden Ansprüche, **dadurch gekennzeichnet, dass** das Lösungsmittel ausgewählt ist aus der Gruppe bestehend aus Pentan, Hexan und Heptan.

**15.** Vefahren nach einem der vorhergenden Ansprüche, **dadurch gekennzeichnet, dass** der Anteil an der sauren ionischen Flüssigkeit in der Reaktionsmischung 0,05 Gew.%, bevorzugt 0,1 bis 10 Gew.%, besonders bevorzugt 0,2 bis 8 Gew.% beträgt.

**16.** Verfahren nach einem der vorhergehenden Ansprüche, **dadurch gekennzeichnet, dass** die saure ionische Flüssigkeit ein Salz der allgemeinen Formel

$[A]_n^+$ $[Y]^{n-}$ ist, in der

$[A]_n^+$ Imidazolium, Ammonium, Cholinium, Pyridinium, Pyrazolium oder Phosphonium ist und

$[Y]^{n-}$ ein Chlorometallat von Aluminium, Titan, Gallium, Indium, Eisen, Cobalt, Nickel, Hafnium, Zirkonium, Kupfer, Zink, Vanadium, Chrom oder Mangan ist.

**17.** Verfahren nach Anspruch 16, **dadurch gekennzeichnet, dass** $[Y]^{n-}$ Chloroaluminat ist.

**18.** Vefahren nach Anspruch 16 oder 17, **dadurch gekennzeichnet, dass** die saure ionische Flüssigkeit 1-Ethyl-3-methylimidazoliumchloroaluminat und/oder 1-Ethyl-3-butylimidazoliumchloroaluminat ist.

**19.** Kohlenwasserstoffharz erhältlich nach einem der Verfahren der Ansprüche 1 bis 18.

**20.** Verwendung einer sauren ionischen Flüssigkeit als Katalysator für die Polymerisation einer Monomerzusammensetzung enthaltend mindestens ein Monomer ausgewählt aus der Gruppe bestehend aus cis-Piperylen, trans-Piperylen, Cyclopenten und 2-Alkenen mit fünf Kohlenstoffatomen.

Europäisches Patentamt

# EUROPÄISCHER RECHERCHENBERICHT

Nummer der Anmeldung
EP 06 01 9318

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/010291 A1 (MURPHY VINCE [US]) 24. Januar 2002 (2002-01-24)<br>* Absatz [0033]; Ansprüche; Beispiel 2 * | 1,2,4,8, 12-14, 16-20 | INV. C08F236/04 C08F10/00 C08F4/06 C08F4/12 |
| X | US 4 098 983 A (OSBORN ROBERT A ET AL) 4. Juli 1978 (1978-07-04)<br>* Beispiele * | 19 | |
| X | US 6 608 155 B2 (BABCOCK LAURA M [US] ET AL) 19. August 2003 (2003-08-19) | 19 | |
| Y | * Zusammenfassung; Beispiele 18-53 * | 1-20 | |
| Y | WO 95/21872 A (BP CHEM INT LTD [GB]; ABDUL SADA ALA A K [GB]; SEDDON KENNETH RICHARD) 17. August 1995 (1995-08-17)<br>* Ansprüche 10-14; Beispiel 2 * | 1-20 | |

RECHERCHIERTE SACHGEBIETE (IPC)
C08F

Der vorliegende Recherchenbericht wurde für alle Patentansprüche erstellt

1

| Recherchenort | Abschlußdatum der Recherche | Prüfer |
|---|---|---|
| Den Haag | 22. Januar 2007 | Mettler, Rolf-Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 06 01 9318

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2007

| Im Recherchenbericht angeführtes Patentdokument | Datum der Veröffentlichung | Mitglied(er) der Patentfamilie | Datum der Veröffentlichung |
|---|---|---|---|
| US 2002010291 A1 | 24-01-2002 | AU 2041100 A | 19-06-2000 |
| | | CA 2353493 A1 | 08-06-2000 |
| | | EP 1144468 A1 | 17-10-2001 |
| | | WO 0032658 A1 | 08-06-2000 |
| US 4098983 A | 04-07-1978 | BE 833042 A1 | 31-12-1975 |
| | | CA 1070335 A1 | 22-01-1980 |
| | | DE 2536889 A1 | 01-04-1976 |
| | | FR 2284620 A1 | 09-04-1976 |
| | | IT 1041537 B | 10-01-1980 |
| | | JP 1106139 C | 30-07-1982 |
| | | JP 51059990 A | 25-05-1976 |
| | | JP 56050897 B | 02-12-1981 |
| | | NL 7510883 A | 18-03-1976 |
| US 6608155 B2 | 19-08-2003 | US 2002183465 A1 | 05-12-2002 |
| WO 9521872 A | 17-08-1995 | AU 1584995 A | 29-08-1995 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9830519 A
- US 6444866 B
- US 6608155 B
- FR 2611700 A
- US 5304615 B
- WO 9521871 A
- WO 0032658 A
- US 6395948 B
- WO 03070670 A
- WO 03089390 A
- US 20040030075 A
- US 20050113621 A
- EP 0791643 A
- DE 10202838 A1


### In der Beschreibung aufgeführte Nicht-Patentliteratur


- **R. MILDENBERG et al.** *Hydrocarbon Resins, International Resins Club,* 2002
- Römpp Chemie Lexikon. 1995, vol. 9, 104
- **CARMICHAEL, ADRIAN J ; HADDLETON, DAVID M.S.** *Polymer synthesis in ionic liquids*
- **WASSERSCHEID, P ; WELTON T.** *Ionic Liquids in Synthesis,* 2003, 319-335
- *Angew. Chem.,* 2000, vol. 112, 3926-3945